Europäisches Patentamt

(19) European Patent Office

Office européen des brevets

(11) Veröffentlichungsnummer: **0 003 333**
A1

# (12) EUROPÄISCHE PATENTANMELDUNG

(21) Anmeldenummer: **79100158.9**

(22) Anmeldetag: **19.01.79**

(51) Int. Cl.²: **F 01 L 15/14**
F 16 K 31/363, F 16 C 29/02
F 01 L 5/02

(30) Priorität: **19.01.78 US 870921**

(43) Veröffentlichungstag der Anmeldung:
**08.08.79 Patentblatt 79/16**

(84) Benannte Vertragsstaaten:
**FR GB IT SE**

(71) Anmelder: **ALTO AUTOMOTIVE, INC.**
**Box 33**
**Deerfield Illinois 60015(US)**

(72) Erfinder: **Vallejos, Tony Eloy**
**6622 Caro**
**Paramount California(US)**

(74) Vertreter: **Kern, Ralf, Dipl.-Ing. et al,**
**Henkel, Kern, Feiler & Hänzel Patentanwälte**
**Möhlstrasse 37**
**D-8000 München 80(DE)**

(54) **Drehschiebergesteuerte Brennkraftmaschine und Verfahren zur Erleichterung der Relativverschiebung zwischen Gleitschieberelementen.**

(57) Drehschiebergesteuerte Brennkraftmaschine und Verfahren zur Erleichterung der Relativverschiebung zwischen Gleitschieberelementen. Diese Vorrichtung weist eine Strömungsleitung bzw. einen Kanal (304) und eine in diese bzw. in diesen eingeschaltete Drehschiebereinrichtung (314) auf. Intermittierend arbeitende Dichtelemente (Schieberplatten) (332, 334) zur Verhinderung einer Strömung durch den Kanal weisen eine Dichtfläche auf, die intermittierend in eine bewegungslose Abdichtlage quer über den Kanal (304) bringbar ist. Spezielle Einrichtungen (358-362) dienen dazu, die Dichtfläche in Abhängigkeit von der Arbeitsweise der Drehschiebereinrichtung (314) in diese stillstehende Abdichtlage gegenüber dem Kanal (304) und aus dieser Abdichtlage heraus zu verlagern, um die Abdichtung im Betrieb der Drehschiebereinrichtung (314) zu verbessern. Weiterhin ist eine Einrichtung (394-408) zur ölfreien Schmierung der zueinander bewegbaren Schieberplatten vorgesehen. Weiterhin sieht die Erfindung ein Verfahren zur Erleichterung der Relativverschiebung zwischen Gleitschieberelementen vor.

FIG. 5

## Drehschiebergesteuerte Brennkraftmaschine

Die Erfindung betrifft eine drehschiebergesteuerte Brennkraftmaschine mit Einlaß und Auslaß, die mit einem Brennraum in Verbindung stehen, einer Welle und im Gleichlauf mit der Welle arbeitenden Drehschiebern zur Steuerung der Strömung durch Einlaß und Auslaß.

Im Hinblick auf die Verbesserung der Arbeitsweise von Brennkraftmaschinen sind zahlreiche Versuche unternommen worden, die üblichen Tellerventile der Maschinenzylinder durch Drehschieber zu ersetzen. Eine derartige Konstruktion ist z.B. in der US-PS 1 692 396 beschrieben. Eine andere, neuere Brennkraftmaschinenkonstruktion mit Drehschiebersteuerung ist z.B. in einem Artikel von David Scott, beginnend auf Seite 78 der Zeitschrift "Popular Science", Juli 1975, in Anwendung auf eine kreuzförmige Brennkraftmaschine beschrieben.

Den Drehschiebern werden im Vergleich zu den üblichen Tellerventilen für die Maschinenzylinder bedeutsame Vorteile zugeschrieben, weil erstere schneller zu arbeiten vermögen und daher das bei schnellaufenden, mit Tellerventilen ausgestatteten Brennkraftmaschinen auftretende Problem mildern können, daß nämlich die Tellerventile tatsächlich bestrebt sein können, der Taktsteuerung der restlichen Maschine nachzueilen, weil die Ventil(rückstell)federn ungeeignet sind, die Ventile bei außergewöhnlich hohen Drehzahlen mit dem Betrieb bzw. der Taktsteuerung der Maschine Schritt halten zu lassen.

Weiterhin kann bei verschiedenen Konstruktionen von Drehschiebern ein einziger Schlitz oder Zulaß, der sowohl
als Kraftstoffeinlaß als auch als Abgasauslaß dient, im
Maschinenzylinder vorgesehen werden. Hierdurch werden die
außerordentlich hohen Temperaturen am Auslaßventil einer
bisher üblichen Maschine mit Tellerventilen vermindert,
wodurch auch die Möglichkeit für eine vorzeitige Zündung
bei der Verdichtung des Kraftstoff/Luft-Gemisches vor dem
eigentlichen Zünden weitgehend ausgeschaltet wird.

Drehschieber bieten auch eine offene, hindernisfreie Strömungsbahn in den und aus dem Brennraum, wodurch der Durchsatz an Kraftstoffgemisch und Abgas wesentlich verbessert
und eine erhebliche Verkleinerung der Schieberüberschneidung, wenn sowohl Einlaß- als auch Auslaßschieber im Betrieb der Maschine offen sind, ermöglicht wird. Dies wiederum trägt zu einer erheblichen Verbesserung des Maschinenwirkungsgrads bei niedriger Drehzahl bei.

Zudem benötigen Drehschieber weniger Energie bzw. Kraft
für ihre Betätigung als Tellerventile, so daß sich die
Ausgangsleistung der Maschine erhöht.

Ungeachtet der verschiedenen wesentlichen, potentiellen
Vorteile, die von einem Drehschiebersystem in einer Brennkraftmaschine erwartet werden können, haben derartige Systeme bisher keine wirtschaftliche Anwendung gefunden,
was zum größten Teil darauf beruht, daß Drehschieber zu
Undichtigkeit neigen, wenn sie zur Ermöglichung einer
freien Drehung ausreichend lose anliegen, während sie festfressen können, wenn sie fest genug anliegen, um die im
Brennraum entwickelten Verbrennungsdrücke auszuhalten.

Aufgabe der Erfindung ist damit u.a. die Schaffung einer
Drehschiebervorrichtung mit einem zusätzlichen bzw. Hilfsdichtungsmechanismus, insbesondere zur Abdichtung des
Brennraums während der Verdichtungs- und Arbeitstakte
im Betrieb der Brennkraftmaschine.

Diese Aufgabe wird bei einer Brennkraftmaschine der eingangs angegebenen Art erfindungsgemäß dadurch gelöst, daß eine Gleitschiebereinrichtung zur Steuerung der Strömung über Einlaß und Auslaß zwischen dem Drehschieber und dem Brennraum in Form zweier Schieberplatten vorgesehen ist, die einander zugewandt sind und einander überlappen und die jeweils eine Öffnung aufweisen, daß die Schieberplatten zwischen einer ersten Stellung, in welcher die Öffnungen miteinander fluchten und eine Strömungsbahn über die Schieberplatten herstellen, und einer zweiten Stellung verschiebbar sind, in welcher die Öffnungen voneinander getrennt sind und eine Strömung durch die Schieberplatten verhindern, daß mit den Schieberplatten Arme verbunden sind und daß letztere an Nocken auf der Welle anliegen, so daß die Schieberplatten bei der Drehung der Welle in Abstimmung auf das Öffnen und Schließen des Drehschiebers zwischen erster und zweiter Stellung verschiebbar sind.

Die zahlreichen Vorteile von Drehschiebern lassen sich mithin bei den erfindungsgemäß ausgebildeten Brennkraftmaschinen realisieren.

Die Erfindung bezweckt in diesem Zusammenhang auch die Schaffung einer verbesserten Schmieranlage für die Drehschiebervorrichtung, die vorzugsweise Luft verwendet und von der erwartet werden kann, daß sie gleichzeitig zur Verringerung des Anteils an unverbrannten Kohlenwasserstoffen im Abgas beiträgt und ein Freiblasen der Schieberoberfläche bewirkt.

Erfindungsgemäß kann weiterhin die Zündkerze in einer optimalen Stellung angeordnet werden, so daß unter Gewährleistung höherer Leistung im Zylinder eine gründliche Verbrennung bei hoher Verdichtung und mit stabiler Flammenfront stattfindet. Dabei erweist sich die Maschine auch als außerordentlich leise im Betrieb.

Ein vorteilhaftes Merkmal besteht dabei darin, daß die Schieberplatten um ihre Randkanten herum in einem in einem Gehäuse festgelegten Dichtraum angeordnet sind, dessen Weite bzw. Höhe im wesentlichen um 0,05 - 0,13 mm größer ist als die Gesamtdicke der Schieberplatten, und daß das Gehäuse eine zentrale Öffnung aufweist, durch welche die Mittellinie der Schieberplatten zur Außenseite des Gehäuses hin freiliegen.

Die erfindungsgemäße Brennkraftmaschine enthält vorzugsweise auch Einrichtungen zur intermittierenden Einleitung von Druckmittel zwischen die Schieber-Platten bei deren Bewegung zwischen den beiden Stellungen zur Erleichterung der Verschiebung. Das Druckmittel, vorzugsweise Druckluft, drückt die Platten auseinander, speziell bei ihrer Bewegung aus der Schließ- in die Offenstellung, in welcher die Öffnungen fluchten. Da der Gehäuse-Dichtraum geringfügig weiter ist als die Dicke der Schieber-Platten beträgt, wird diese Auseinanderbewegung ermöglicht. Während des Arbeitstakts des betreffenden Zylinders, bei dem die Schieber-Platten einen Verschluß herstellen, drückt andererseits der im Brennraum herrschende Druck eine Schieber-Platte in der Schließstellung um ihren Umfang herum gegen die Außenfläche des Dichtraums an, wodurch die Dichtwirkung verbessert wird.

Vorzugsweise weist die Druckmittel-Zufuhreinrichtung durch die erste Platte verlaufende Durchlässe zur Herstellung einer Verbindung zwischen dem durch die nahezu aneinander anliegenden Platten gebildeten Raum und einer Einblaseinrichtung zur Zufuhr von Druckluft als Druckmittel auf. Da diese Platten zumindest in den kritischsten Teilen ihrer Bewegung durch die Luft auseinandergedrängt werden und auf einem Luftkissen schweben, ist nur wenig oder gar kein Öl für die Schmierung dieser Platten nötig, wodurch der Ölausstoß in die Abgasleitung verringert wird.

Vorteilhaft sind auch Mittel zur Strömungsverbindung zwischen der Lufteinblaseinrichtung und der Fläche der ersten bzw. oberen Schieber-Platte vorhanden, welche der zweiten Platte und dem Brennraum gegenüberliegt, um Druckmittel zu dieser gegenüberstehenden Fläche zu leiten und deren Verschiebung im Gehäuseraum zu erleichtern und speziell die Verschiebung der Platten aus der zweiten in die erste Stellung zu begünstigen.

Die Lufteinblaseinrichtung kann eine Kolben-Zylinder-Anordnung, die in Abstimmung auf die Bewegung der Schieber-Platten arbeitet, oder eine Druckluft einblaseinheit sein.

Die Armeinrichtung zur Betätigung der beiden Schieber-Platten kann zwei Arme umfassen, die jeweils am Mittelteil einer Platte angebracht sind, wobei die Arme durch die Platten eine Verbindung herstellen, indem sie die zentrale Öffnung durchsetzen. Demzufolge kann der im Gehäuse festgelegte Dichtraum eine geschlossene, ununterbrochene Nut sein, die eine gleichmäßige und sichere Abdichtung um den Umfang der Schieber-Platten herum herstellt.

Ein besonderes Merkmal kann darin gesehen werden, daß die Verbindung zwischen den Armen und den Schieberplatten an beiden Bauteileinheiten vorgesehene Zapfen und zwischengefügte Verbindungsmittel mit Ausnehmungen zur Aufnahme der Zapfen umfaßt, so daß jede Schieberplatte und der mit ihr verbundene Arm gegen eine Relativbewegung zueinander in Bewegungsrichtung zwischen erster und zweiter Stellung festgelegt sind, während eine Relativbewegung zwischen diesen Bauteilen senkrecht zu den Schieberplattenflächen stattfinden kann. Hierdurch wird eine geringe lotrechte Bewegungsfreiheit aufgrund der zusätzlichen Breite der Nut im Gehäuse ermöglicht, so daß die Platten durch die Luftschmieranlage auseinandergedrückt und dann in der Schließstellung durch den im Brennraum herrschenden Druck wieder gegeneinander gepreßt werden können.

Infolgedessen wird z.B. beim Arbeitstakt der Maschine eine feststehende bzw. bewegungslose Abdichtung des Brennraums hergestellt, während sich der Drehschieber gleichzeitig im Betrieb der Maschine ständig weiterdrehen kann. Eine feststehende oder bewegungslose Abdichtung zwischen sich nicht zueinander bewegenden Flächen führt zu einem wesentlich geringeren Verschleiß der Abdichtteile im Vergleich zu einer Dichtung mit relativ zueinander beweglichen Flächen. Außerdem vermag eine feststehende Dichtung eine wesentlich wirkungsvollere Hochdruckabdichtung zu gewährleisten. Dies führt wiederum zu einer größeren Zuverlässigkeit der Abdichtung und zu einer längeren Betriebslebensdauer der Dichtungsteile.

Typischerweise können mehrere Drehschieberanordnungen der genannten Art in geradliniger Anordnung vorgesehen und durch eine gemeinsame Steuerwelle betätigt werden, bei der es sich insbesondere um eine Nockenwelle handeln kann. Die verschiedenen Drehschieber in dieser Linearanordnung können sämtlich zur Vereinfachung der Maschinenkonstruktion durch eine einzige drehbare Welle gebildet sein, so daß die richtige Arbeitstaktfolge der verschiedenen Drehschieber dauerhaft festgelegt ist.

Die Erfindung ist auf verschiedene Typen von Brennkraftmaschinen anwendbar, z.B. auf Viertakt-Ein- und -Mehrzylinder- sowie Dieselmaschinen. Vorzugsweise wird die Erfindung auf Maschinen angewandt, bei denen ein einziger Zulaß sowohl als Einlaß als auch als Auslaß des Brennraums dient. Die Erfindung ist auch auf andere Maschinenarten und daneben auch auf andere, mit Hochdruckströmungsmitteln arbeitende Maschinen anwendbar.

Im folgenden wird die Erfindung anhand von lediglich einen Lösungsweg darstellenden Zeichnungen näher erläutert. Es zeigen:

Fig. 1    eine Aufsicht auf eine derzeit bevorzugte Aus-
         führungsform der erfindungsgemäßen Brennkraft-
         maschine,

Fig. 2    eine Stirnseitenansicht der Maschine nach Fig. 1,

Fig. 3    eine in vergrößertem Maßstab gehaltene, auseinan-
         dergezogene perspektivische Darstellung eines Teils
         der Maschine nach Fig. 1 mit teilweise weggelassenen Bauteilen,

Fig. 4    eine Fig. 3 ähnelnde, in weiter vergrößertem Maßstab gehaltene Darstellung der Maschine nach Fig.1
         zur Veranschaulichung anderer Merkmale der Erfindung,

Fig. 5    einen in vergrößertem Maßstab gehaltenen Schnitt
         durch einen Zylinder und die Schieberanordnung
         der Maschine, in welcher sich die Gleitschieberanordnung in ihrer Offenstellung befindet,

Fig. 6    eine Fig. 5 ähnelnde Darstellung, welche die Gleitschieberanordnung in der Schließstellung zeigt,

Fig. 7    eine perspektivische Teilansicht eines Kurvenfühlers bzw. Nockenmitnehmers,

Fig. 8    eine teilweise weggebrochene Aufsicht auf zwei
         Gleitschieberelemente gemäß der Erfindung,

Fig. 9    einen in stark vergrößertem Maßstab gehaltenen
         Schnitt längs der Linie 9-9 in Fig. 8 und

Fig. 10   eine perspektivische Darstellung, von der Unterseite her gesehen, zur Veranschaulichung der
         Dichtflächen der geschlossenen Schieberplatten
         nach Fig. 1 bis 9.

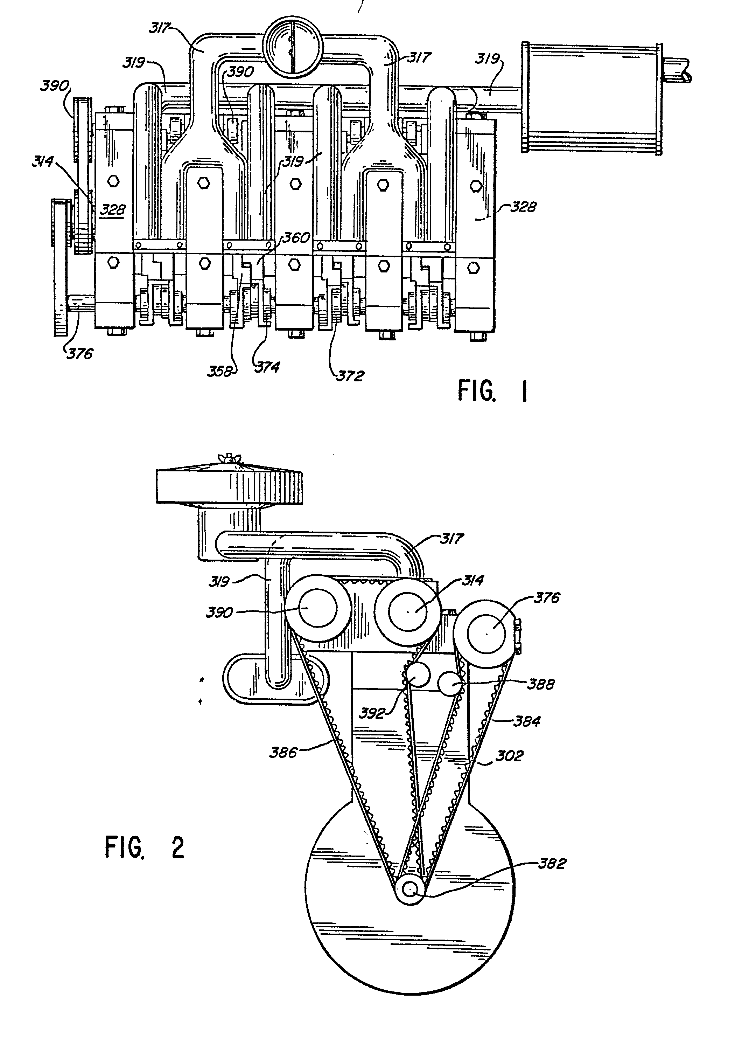

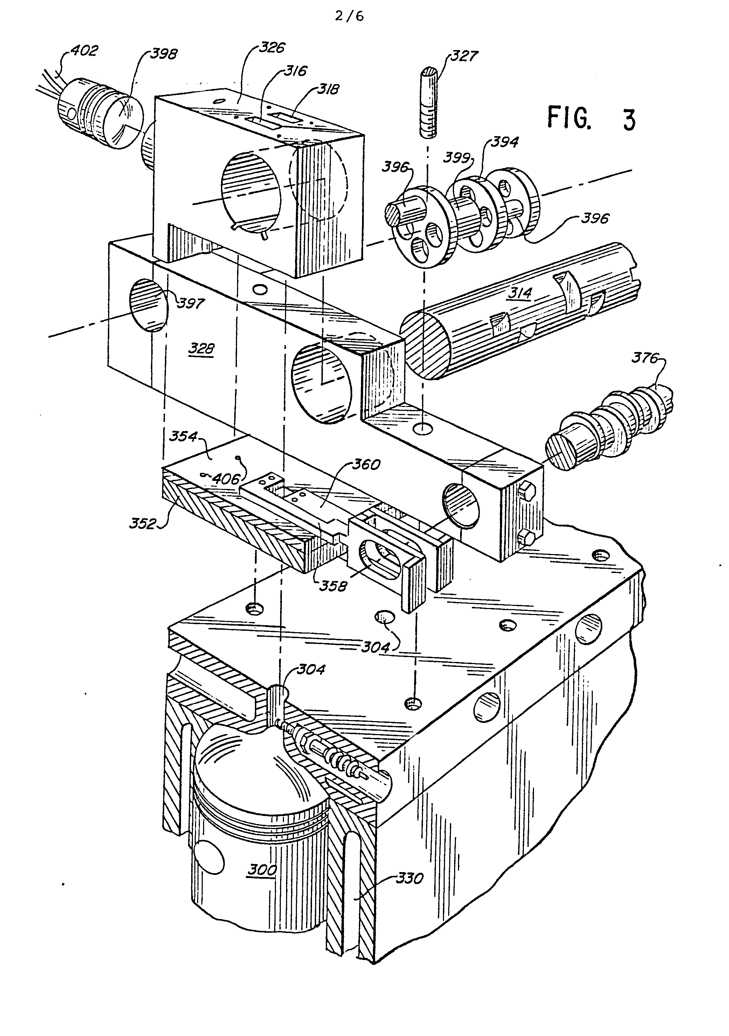

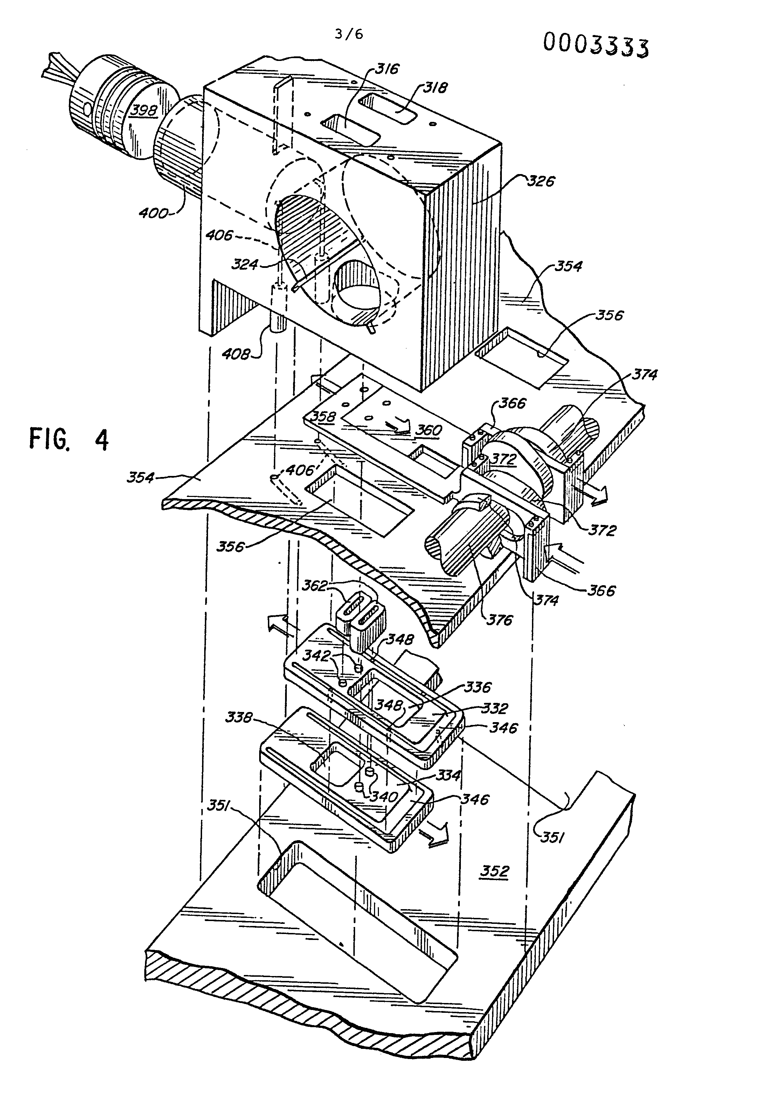

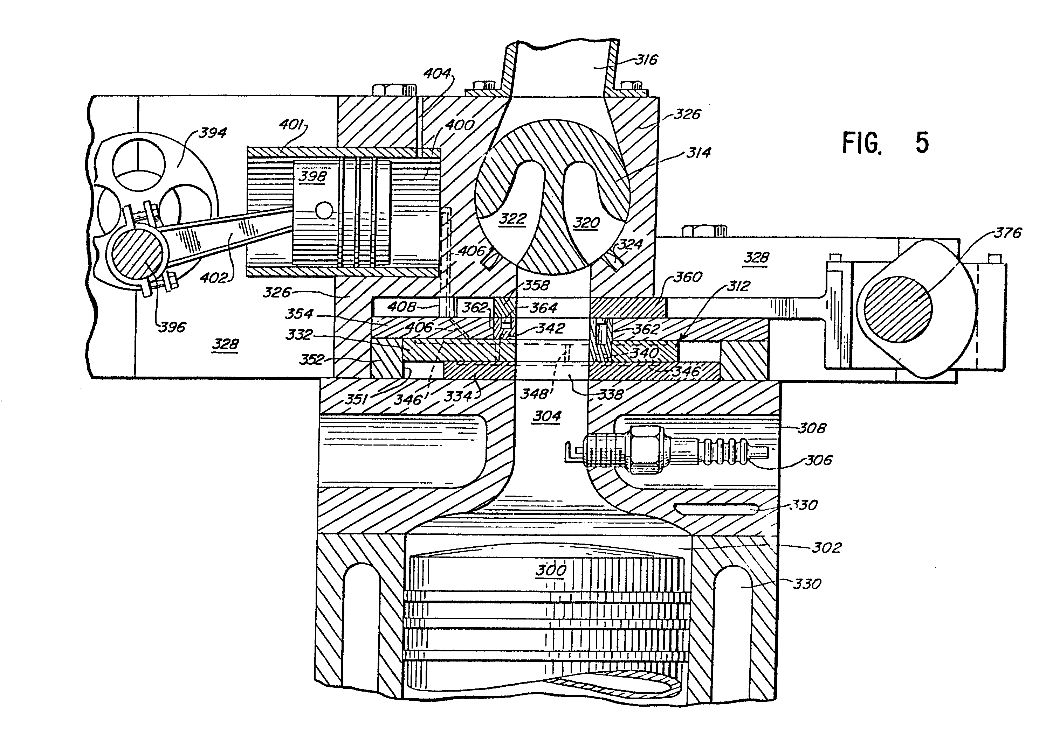

Die in den Fig. 1 bis 10 dargestellte Ausführungsform der Erfindung ähnelt allgemein der Konstruktion nach der US-PS 4 119 077 insofern, als übliche Kolben 300 vorgesehen sind, die in den Zylindern 302 (Fig. 5) in an sich bekannter Weise geführt sind. Obgleich insbesondere eine Viertakt-Benzinmaschine dargestellt ist, ist die Erfindung wiederum auch auf Dieselmaschinen und andere Kraft- bzw. Antriebsmaschinen anwendbar. Das obere Ende des Zylinders 302 ist unter Bildung einer verengten Einschnürung 304 verengt, in welche eine Zündkerze 306 hineinragt, die in einer Vertiefung bzw. Bohrung 308 im Zylinderkopf 310 sitzt. Die Einschnürung 304 steht mit einem Durchlaß oder Kanal 311 in Verbindung, welcher sich durch Schieberplatten 312 zu einem Drehschieber 314 erstreckt, welcher dem vorher beschriebenen Drehschieber ähneln kann.

Der Drehschieber 314 steht mit einem Einlaß 316 und einem Verteiler bzw. Sammler 318 in Verbindung, die ihrerseits mit einem Ansaugverteiler bzw. -krümmer 317 bzw. einem Abgassammler 319 in Verbindung stehen, so daß die Einschnürung 304 über Durchlässe 320 und 322 des Drehschiebers 314 abwechselnd mit den beiden Verteilern bzw. Sammlern in Verbindung gelangt.

Wie bei der US-PS 4 119 077 sind im Schieberblock 326 Abstreifdichtungen 324 vorgesehen. Der Schieberblock 326 kann bei der dargestellten Ausführungsform jedoch maschinenfest und unbeweglich sein, wobei er an Ständer- bzw. Tragblöcken 328 befestigt ist, die sich ihrerseits zwischen den Schieberanordnungen der einzelnen Zylinder 302 befinden und die mittels Schraubbolzen 327 mit dem Zylinderblock verschraubt sein können.

Die Zylinder 302 sind vollständig von umlaufenden Kühlwasserkanälen 330 umschlossen, wobei die Zylinderkopfbasis 310 ebenfalls Kühlwasserkanäle 330 enthalten kann.

Die Gleitschieber- bzw. Schieberplattenanordnung 312 dient in erster Linie zum dichten Verschließen der Einschnürung 304 während der Verdichtungs- und Arbeitstakte der
Maschine, so daß die Abdichtfunktion des Drehschiebers nur
eine vergleichsweise sekundäre Rolle spielt und dieser
Drehschieber in erster Linie zur Strömungssteuerung zwischen Einlaß- und Auspuffsystem dient.

Die Gleitschieberanordnung 312 umfaßt zwei Schieberplatten
332 und 334, die einander überlappend aufeinander liegen.
Die beiden Schieberplatten besitzen jeweils eine Öffnung
336 bzw. 338, von denen erstere größer ist als letztere,
so daß sie Zapfen 340 der zweiten Schieberplatte 334
aufzunehmen vermag. Entsprechende Zapfen 342 der ersten
Schieberplatte 332 befinden sich an deren Oberseite.

Die beiden Schieberplatten 332 und 334 weisen um ihren Umfang herum jeweils eine U-förmige Nut 346 auf. Von der Sohle der Nut 346 der ersten Schieberplatte 332 aus verlaufen Bohrungen 348 auf die dargestellte Weise zur Herstellung
einer Verbindung zwischen den jeweiligen Nuten 346 über
die Schieberplatte 332.

Die beiden Schieberplatten sind übereinanderliegend in
einer Öffnung bzw. Ausnehmung in einer unteren Schieber-
führungsplatte 352 angeordnet. Letztere ist geringfügig, vorzugsweise um etwa 0,05 - 0,13 mm dicker als die Gesamtdikke der beiden Schieberplatten 332 und 334, so daß die
Schieberplatten ein geringfügiges seitliches Spiel in der
Ausnehmung 351 besitzen. Die Führungsplatte 352 besteht vorzugsweise aus einem durchgehenden Element, das sich über
alle Zylinder 302 der Maschine erstreckt und an jeder Einschnürung 304 jedes Zylinders jeweils eine Ausnehmung 351
besitzt.

Eine obere Schieber-Führungsplatte 354 besteht ebenfalls
aus einer Metalleiste bzw. -platte, die sich vorzugsweise
über alle Zylinder hinweg erstreckt und im allgemeinen bezüglich ihrer Erstreckung mit der unteren Führungsplatte 352 übereinstimmt.

Die obere Schieber-Führungsplatte 354 weist über den Öffnungen oder Ausnehmungen 351 der unteren Führungsplatte jeweils eine Öffnung bzw. Ausnehmung 356 auf. Die Führungsplatten 352 und 354 umschließen die Schieberplatten 332 und 334. Die Öffnung 356 ist sowohl in Länge als auch in Breite kleiner als die Schieberplatten 332 und 334; vorzugsweise besitzt sie dieselbe Breite bzw. Weite wie die Öffnungen 336 und 338, die untereinander ebenfalls vorzugsweise gleiche Breite besitzen. Die Schieberplatten 332 und 334 sind somit in einer durch die Führungsplatten 352 und 354 festgelegten Kammer bzw. einem Hohlraum eingeschlossen, wobei sie auf der Zylinderkopfplatte 310 aufliegen, aber über die Öffnung 356 zugänglich sind.

Die eine Schieberplatte 332 oder 334 kann aus graphitiertem Aluminium bestehen, während die andere Schieberplatte aus einer leichten Stahllegierung hergestellt sein kann, um die Verschiebung durch Herabsetzung der Trägheitskräfte zu begünstigen.

Die Schieberplatte 332 ist mit einem Arm 358 verbunden, während die Schieberplatte 334 mit einem anderen Arm 360 verbunden ist. Die über der Schieber-Führungsplatte 354 angeordneten Arme 358 und 360 stehen über die Öffnung 356 mit der jeweils zugeordneten Schieberplatte über Anschluß- bzw. Verbindungselemente 362 in Verbindung, bei denen es sich um etwa rechteckige, hohle, rohrförmige Gebilde handeln kann, die mit ihren unteren Enden jeweils über die Zapfen 340 und 342 aufgesetzt sind und an ihren oberen Enden vom betreffenden Arm 358 bzw. 360 nach unten ragende Zapfen 364 aufnehmen. Auf diese Weise sind die Arme und die Schieberplatten zur Ermöglichung einer waagerechten Verschiebung in der Ebene der Schieberplatten miteinander verbunden. Aufgrund dieser Verbindungsmittel vermögen sich

jedoch die Schieberplatten 332 und 334 senkrecht zur waagerechten Bewegungslinie aufwärts und abwärts zu verlagern, soweit dies durch das Spiel aufgrund der geringfügig größeren Dicke der unteren Führungsplatte 352 ermöglicht wird.

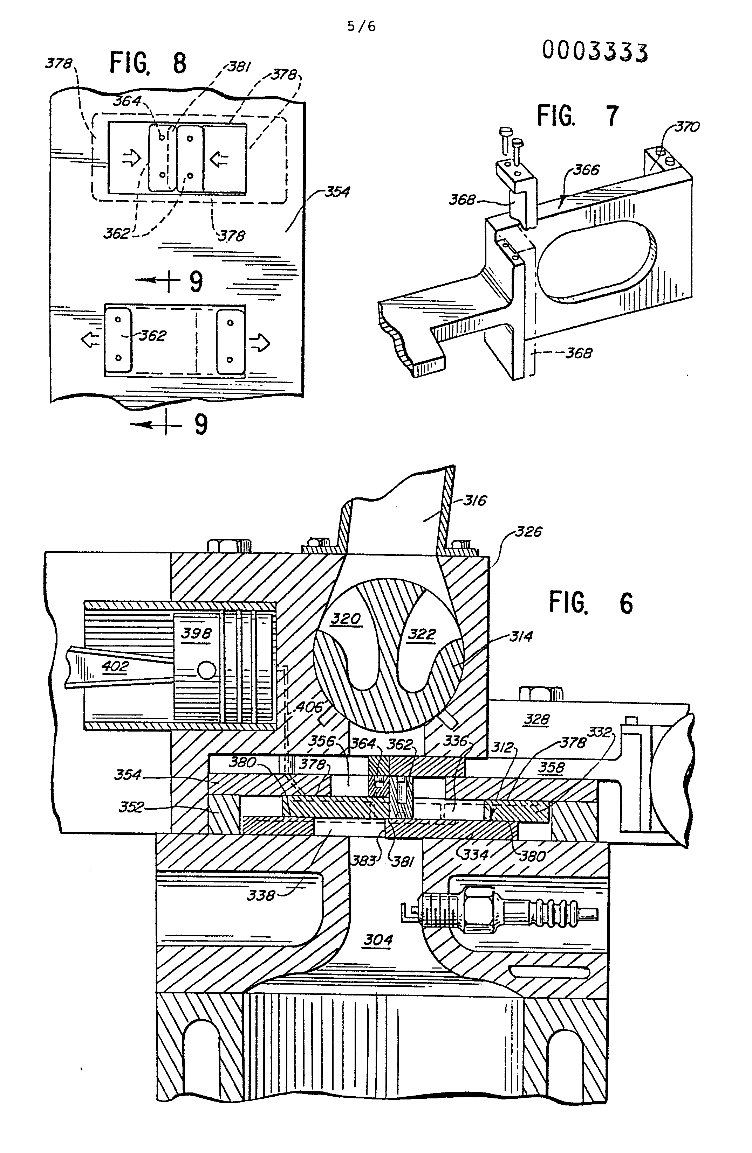

Die Arme 358 und 360 tragen ihrerseits jeweils Nockenmitnehmer bzw. Kurvenfühler 366 mit Schubplatten 368 und Zugplatten 370, die jeweils mit einem getrennten Nocken 372 bzw. 374 auf einer Nockenwelle 376 in Berührung stehen. Bei der Drehung der Nockenwelle 376 verschieben sich daher die Arme 358, 360 und die damit verbundenen Schieberplatten 332 bzw. 334 in entgegengesetzten Richtungen zwischen einer Schließstellung, in welcher die Öffnungen 336 und 338 der Schieberplatten gemäß Fig. 6 nicht miteinander fluchten, und einer Offenstellung, in welcher diese Öffnungen 336, 338 aufeinander ausgerichtet sind (vgl. Fig. 5) und eine Strömungsverbindung zwischen dem Drehschieber 314 und der Einschnürung 304 des Zylinders herstellen. Die gegenläufige Verschiebung der beiden Schieberplatten erfolgt zwangsläufig bzw. desmodromisch ohne die üblichen Ventilfedern, welche der Ventilbewegung Widerstand leisten. Die Steuerverschiebung kann somit mit geringerem Energieverbrauch als bei einer Tellerventilanordnung erfolgen.

Die Anordnung der Nockenwelle 376 und Form der Nocken sind so gewählt, daß sich der Gleitschieber 312 während des Verdichtungs- und Arbeitstakts der Maschine in der Schließstellung befindet. Zu Beginn des Auspufftakts der Maschine öffnen die Nocken an der Nockenwelle 376 die Schieberplatte 312 zur Ermöglichung des Abgasausstosses, worauf die Schieberplatten während des Ansaugtakts der Maschine in Offenstellung verbleiben. Im Anschluß hieran drängen die Nocken der Nockenwelle 376 den Gleitschieber 312 wieder in Schließstellung.

Gleichzeitig mit dieser Bewegung dreht sich der Drehschieber 314 unter Ausrichtung der Enden seiner Durchlässe 320 und 322 auf den Durchlaß 323 im Schieberblock 326, so daß eine Verbindung zwischen Ansaugkrümmer und Auspuffsammler 316 bzw. 318 einerseits und Zylinder 302 andererseits hergestellt wird. Wenn der Gleitschieber 312 geschlossen ist, ist der Drehschieber gemäß Fig. 6 ebenfalls geschlossen.

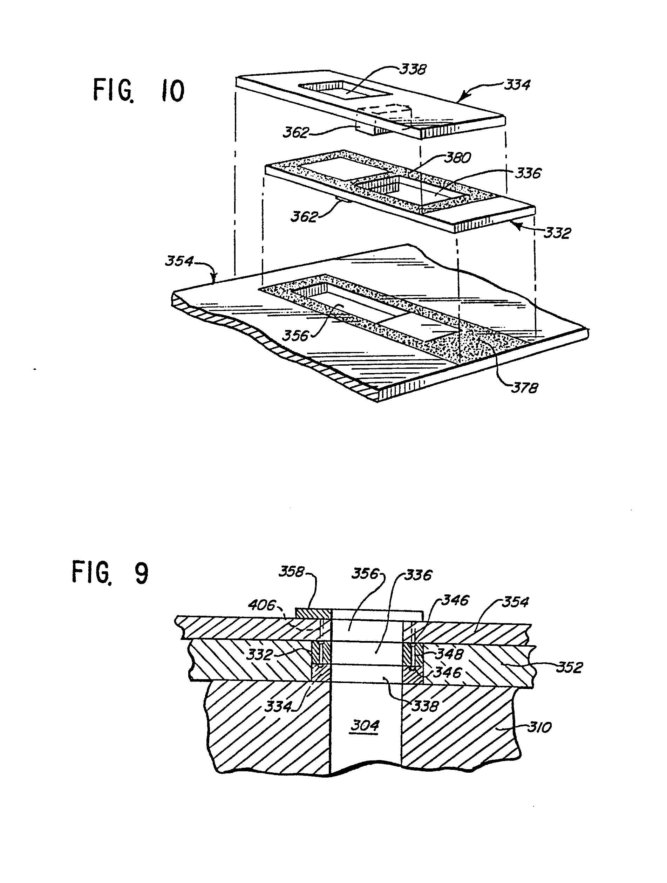

In der Schließstellung können die Schieberplatten 332 und 334 über die durch die zusätzliche Dicke der unteren Schieber-Führungsplatte 352 bestimmte kleine Strecke durch den Druck nach oben verlagert werden, der beim Verbrennungs- bzw. Arbeitstakt der Maschine innerhalb der Einschnürung 304 herrscht. Durch diesen erhöhten Druck wird insbesondere die obere Schieberplatte 332 fest an die Unterseite der oberen Schieber-Führungsplatte 354 angedrückt. Da die Öffnung 356 im wesentlichen dieselbe Weite bzw. Breite besitzt wie die Öffnung 336, wird um den Umfang der Unterseite der oberen Führungsplatte 354 und um die obere Schieberplatte 332 herum eine ununterbrochene Dichtfläche 378 gebildet, wie dies beispielsweise in Fig. 8 und auch in Fig. 6 dargestellt ist. Außerdem stellt die untere Schieberplatte 334 eine andere Dichtfläche 380 mit der oberen Schieberplatte 332 her. Beispielsweise wird gemäß Fig. 6 an der rechten Seite der Öffnung 338 zwischen den Platten 332 und 334 eine Dichtfläche 381 hergestellt, durch welche die Berührungs- bzw. Überschneidungsposition der beiden Schieberplatten abgedichtet wird. Diese zuletztgenannte Dichtfläche 381, die etwa 3,2 mm breit sein kann, wird durch einen vorspringenden Teil 383 der Schieberplatte 334 gebildet, welcher in der Schließstellung die Schieberplatte 332 untergreift.

Erfindungsgemäß ist also eine Reihe von Druckdichtflächen vorgesehen, nämlich einmal zwischen der oberen Schieber-Führungsplatte 354 und der oberen Schieberplatte 332 und zum anderen zwischen letzterer und der unteren Schieberplatte 334, so daß mit zunehmendem Druck im Zylinder 302 eine zunehmende Dichtwirkung gewährleistet wird, weil durch einen solchen erhöhten Druck die Schieberplatten und die obere Führungsplatte fester gegeneinander angepreßt werden. Außerdem wird durch die große Oberfläche der Schieberplatten 332 und 334 der von dem im Brennraum herrschenden Druck hervorgerufene Andruck der Schieberabdichtung vervielfacht.

Ersichtlicherweise ist die als durchgehende Platte ausgelegte obere Schieber-Führungsplatte 354 in Ständer- bzw. Lagerblöcken 328 gehaltert, die auf den Führungsplatten 352, 354 aufliegen und diese in ihrer Einbaulage halten.

Mit den gegen die obere Führungsplatte 354 wirkenden Schieberplatten 332 und 334 kann mithin eine sichere, nahezu hermetische Abdichtung gewährleistet werden, die im Betrieb einer bereits gebauten Ausführungsform der Erfindung ihre hohe Wirksamkeit bewiesen hat.

Die Schiebervorrichtung gemäß den Fig. 1 bis 10 verwendet ein verbessertes Druckgasschmiersystem als Ersatz für die bisherige Schmierölanlage. Typischerweise wird Luft, insbesondere Druckluft, zur Erleichterung der Verschiebung der Schieberplatten 332 und 334 verwendet, um diese Platten speziell bei ihrer Bewegung aus der Schließstellung in die Offenstellung in dem durch die Öffnung bzw. Ausnehmung 351 gebildeten Hohlraum voneinander zu trennen.

Ein derartiges Druckluftschmiersystem kann ersichtlicherweise auch für andere Ventilsteuervorrichtungen und mechanische Systeme benutzt werden, insbesondere unter Bedingungen, unter denen es unerwünscht ist, die üblichen Ölmengen einzusetzen. In dem speziellen, dargestellten Fall kann eine etwa auf den sich verschiebenden Flächen der Schieberplatten 332 und 334 befindliche Ölmenge möglicherweise in die Auspuffanlage der Maschine eingesaugt werden, wodurch sich sowohl der Ölverbrauch als auch der Anteil an unverbrannten Kohlenwasserstoffen im Abgas erhöhen.

Fig. 2 veranschaulicht die Synchronsteuerung der Maschine mittels herkömmlicher Zahnriemen. Die Kurbelwelle 382 treibt dabei bei der dargestellten Ausführungsform zwei Zahnriemen 384, 386 an, obgleich auch die Verwendung eines einzigen Zahnriemens möglich ist. Der Zahnriemen 384 verbindet die Kurbelwelle 382 mit der Nockenwelle 376 zur Steuerung derselben. Dabei läuft der Zahnriemen 384 auch über eine Zwischen- bzw. Spannrolle 388.

Der Zahnriemen 386 verbindet die Kurbelwelle 382 mit dem Drehschieber 314 und einer Hilfskurbelwelle 390 zur Steuerung der Arbeitsweise dieser Teile. Der Zahnriemen 386 verläuft dabei in an sich bekannter Weise über eine Zwischen- bzw. Spannrolle 392.

Der Umfang bzw. die Zähnezahl der auf der Kurbelwelle 382 sitzenden Zahnriemenscheiben für die Zahnriemen 384 und 386 beträgt die Hälfte des Umfangs bzw. der Zähnezahl der Zahnriemenscheiben, über welche dieselben Zahnriemen an der Nockenwelle 376, am Drehschieber 374 und an der Hilfskurbelwelle 390 laufen, so daß die genannten Bauteile bei jeweils zwei Kurbelwellenumdrehungen eine Umdrehung durchführen.

Bei der bereits gebauten Ausführungsform der Erfindung ist die Hilfskurbelwelle 390 in der dargestellten Form vorgesehen, doch kann auch eine herkömmliche Kurbelwelle verwendet werden. Die Hilfskurbelwelle besteht grundsätzlich aus einer Reihe von mit Bohrungen versehenen Scheiben 394, die über ihre jeweiligen Bohrungen durch Verbindungsstangen bzw. Pleuelzapfen 396 nach Art einer Kurbelwelle miteinander verbunden sind, wobei die gegenseitige Ausrichtung der Kurbeln durch Umordnung der einzelnen Verbindungszapfen 396 in andere Bohrungen der Scheiben 394 nach Belieben geändert werden kann. Jeweils zwei Scheiben 394 sind durch eine zentrale Welle 399 miteinander verbunden, die ihrerseits in einer Bohrung 397 im Lagerblock 328 drehbar gelagert ist.

In einem Zylinder 400 ist ein Hilfskolben 398 bewegbar geführt, der auf übliche Weise über eine Kolbenstange bzw. Pleuelstange 402 mit der Hilfskurbelwelle 390 verbunden ist. Eine mit der Außenseite der Maschine in Verbindung stehende Belüftungsbohrung 404 ist in einem kleinen Abstand von etwa 25,4 mm vom Innenende des Zylinders 400 angeordnet. Der Zylinder 400 kann aus einer im Schieberblock 226 vorgesehenen und eine Zylinderbüchse 401 aufnehmenden Bohrung bestehen.

Mit dem Innenende des Zylinders 400 in Verbindung stehende Durchgänge bzw. Kanäle 406 verlaufen durch den Schieberblock 326 und von dessen Unterseite aus zu einem Einsatz 408. Von hier aus verlaufen die Kanäle 406 über die obere Schieber-Führungsplatte 354 zu einer Stelle, an welcher sie mit der betreffenden Nut 346 der Schieberplatte 332 in Verbindung stehen.

Wenn der Kolben 398 durch die Hilfskurbelwelle 390 im Gleichlauf mit der Kurbelwelle 382 und dem Drehschieber 314 in Hin- und Herbewegung versetzt wird, fördert er bei seinem Vorwärtshub Druckluft zum Kanal 406 und zur Belüftungsbohrung 404. Wenn der Kolben 398 im Zylinder 400 in Einwärtsrichtung über die Belüftungsbohrung 404 hinausgelaufen ist, wird der Kanal 406 mit unter hohem Druck stehender Luft beschickt, die in die Nut 346 der oberen Schieberplatte 332 hineingepreßt wird und von hier über die Bohrungen 348 in die Nut bzw. Nuten 346 der unteren Schieberplatte 334 eintritt. Von hier aus übt die Druckluft einen Druck gegen die Dichtflächen zwischen der Oberseite der Schieberplatte 332 und der oberen Führungsplatte 354 aus, wobei sie gleichzeitig die Abdichtung zwischen der oberen Schieberplatte 332 und der unteren Schieberplatte 334 aufzuheben hilft.

Aufgrund zweckmäßiger Zeitsteuerung durch die Hilfskurbelwelle 390 findet dieser Vorgang am Ende des Arbeitstakts statt, wenn der Gleitschieber 312 geöffnet werden soll. Durch die über den Kanal 406 in das Schiebersystem einströmende Druckluft werden die Dichtflächen des Gleitschiebers 312 voneinander gelöst bzw. getrennt, wenn sich die Schieberplatten 332 und 334 über die von der Nockenwelle 376 angetriebenen Arme 358 bzw. 360 in ihre Offenstellung bewegen. Nach dem Öffnen der Schieber tritt die Druckluft in die zum Durchlauf 320 des Drehschiebers führende, geöffnete Öffnung ein, um schließlich, vermischt mit dem Abgas, zum Abgassammler 319 zu strömen. Durch diese Luft wird zusätzlicher Sauerstoff für die Oxydation etwa noch unverbrannter Kohlenwasserstoffe zur Verfügung gestellt, während gleichzeitig die Schieberplatten gekühlt werden. Weiterhin gewährleistet diese Druckluft eine Abblaswirkung zur Reinigung der Schieberplatten sowie eine praktisch ölfreie Schmierwirkung für die Schieberplatten 332 und 334. Gewünschtenfalls können zur weiteren Verbesserung der Schmierung geringfügige Ölmengen angewandt werden.

Typischerweise kann sich der Hilfskolben 398 im Betrieb der Brennkraftmaschine bei einem Rotationswinkel der Kurbelwelle 382 von etwa 20° nach Beginn des Öffnungsvorgangs zwischen den Schieberplatten 332 und 334 in seine obere Totpunktstellung bewegt haben. Wenn die Schieberplatten 332 und 334 während ihrer Bewegung aus der Offenin die Schließstellung ebenfalls mit einem Druckluftstrahl beaufschlagt werden sollen, kann die Hilfskurbelwelle 390 so ausgelegt werden, daß sie sich bei jeder Umdrehung der Kurbelwelle 382 einmal dreht.

Wahlweise können der Hilfskolben 398 und die zugeordnete Anordnung durch eine andere, geeignete Vorrichtung zur intermittierenden Druckluftzufuhr zur Steuerschiebervorrichtung ersetzt werden.

Durch die vorstehend beschriebene Dichtungsanordnung wer-

0003333

den also lange Betriebslebensdauer und Zuverlässigkeit der Drehschieber sowie der Schieberplatten gewährleistet. Infolgedessen kann die Betriebstemperatur der Maschine beträchtlich gesenkt werden, wodurch wiederum die Menge der von der Maschine erzeugten Schadstoffe in Form von Stickoxiden erheblich verringert wird. Ebenso vermag eine Brennkraftmaschine gemäß der Erfindung im Verhältnis zu ihrer Baugröße eine vergleichsweise hohe Leistung in Verbindung mit guten Eigenschaften im Fahrbetrieb zu gewährleisten, weil wegen der Verwendung von Drehschiebern eine Ventilüberschneidung weitgehend ausgeschaltet werden kann. Drehschieber bieten an sich eine wesentlich höhere Leistung beim Ansaugen und Ausstoßen als Tellerventile, da hierbei kein Ventilteller vorhanden ist, welcher die Strömung in den und aus dem Brennraum behindern könnte. Es kann somit erwartet werden, daß die Brennkraftmaschine wirtschaftlicher und gewünschtenfalls mit Kraftstoff niedrigerer Oktanzahl zu arbeiten vermag.

Patentansprüche

1. Drehschiebergesteuerte Brennkraftmaschine mit Einlaß und Auslaß, die mit einem Brennraum in Verbindung stehen, einer Welle und im Gleichlauf mit der Welle arbeitenden Drehschiebern zur Steuerung der Strömung durch Einlaß und Auslaß, dadurch gekennzeichnet, daß eine Gleitschiebereinrichtung (312) zur Steuerung der Strömung über Einlaß und Auslaß (320, 322) zwischen dem Drehschieber (314) und dem Brennraum (302) in Form zweier Schieberplatten (332, 334) vorgesehen ist, die einander zugewandt sind und einander überlappen und die jeweils eine Öffnung (336, 338) aufweisen, daß die Schieberplatten (332, 334) zwischen einer ersten Stellung, in welcher die Öffnungen (336, 338) miteinander fluchten und eine Strömungsbahn über die Schieberplatten (332, 334) herstellen, und einer zweiten Stellung verschiebbar sind, in welcher die Öffnungen (336, 338) voneinander getrennt sind und eine Strömung durch die Schieberplatten (332, 334) verhindern, daß mit den Schieberplatten (332, 334) Arme (358, 360) verbunden sind und daß letztere an Nocken (372) auf der Welle (376) anliegen, so daß die Schieberplatten (332, 334) bei der Drehung der Welle (376) in Abstimmung auf das Öffnen und Schließen des Drehschiebers (314) zwischen erster und zweiter Stellung verschiebbar sind.

2. Brennkraftmaschine nach Anspruch 1, dadurch gekennzeichnet, daß eine Einrichtung (394-408) zur intermittierenden Zufuhr von Druckgas zwischen die Schieberplatten (332, 334) bei deren Verschiebung aus der zweiten in die erste Stellung vorgesehen ist, um diese Verschiebung zu erleichtern.

3. Brennkraftmaschine nach Anspruch 2, dadurch gekennzeichnet, daß die Druckgas-Zufuhreinrichtung (394-408)

0003333

die erste Schieberplatte (332) durchsetzende Durchlässe bzw. Kanäle und Lufteinblasmittel (404-408) zur Zufuhr von Druckluft als Druckgas aufweist, wobei die Kanäle eine Verbindung zwischen den Einblasmitteln (404-408) und dem Raum zwischen den einander zugewandten Schieberplatten (332, 334) herstellen.

4. Brennkraftmaschine nach Anspruch 3, dadurch gekennzeichnet, daß Mittel (336, 338, 348) zur Herstellung einer Verbindung zwischen den Lufteinblasmitteln (404-408) und der der zweiten Schieberplatte (334) sowie dem Brennraum (302) zugewandten Fläche der ersten Schieberplatte (332) vorgesehen sind, um zur genannten Fläche Druckluft zur weiteren Erleichterung der Bewegung aus der zweiten in die erste Stellung zuzuführen.

5. Brennkraftmaschine nach Anspruch 4, dadurch gekennzeichnet, daß die Lufteinblasmittel einen Kolben (398) und einen Zylinder (400, 401) umfassen, die in Abstimmung auf die Bewegung der Schieberplatten (332, 334) arbeiten.

6. Brennkraftmaschine nach Anspruch 4, dadurch gekennzeichnet, daß die Schieberplatten (332, 334) um ihre Randkanten herum in einem in einem Gehäuse (326) festgelegten Dichtraum (351) angeordnet sind, dessen Weite bzw. Höhe im wesentlichen um 0,05 - 0,13 mm grösser ist als die Gesamtdicke der Schieberplatten (332, 334), und daß das Gehäuse (326) eine zentrale Öffnung aufweist, durch welche die Mittelteile der Schieberplatten (332, 334) zur Außenseite des Gehäuses (326) hin freiliegen.

7. Brennkraftmaschine nach Anspruch 6, dadurch gekennzeichnet, daß die Arme (358, 360) mit erster bzw. zweiter Schieberplatte (332 bzw. 334) an einer mittigen Stelle derselben durch die zentrale Öffnung hindurch verbunden sind.

8. Brennkraftmaschine nach Anspruch 7, dadurch gekennzeichnet, daß die Verbindung zwischen den Armen (358, 360) und den Schieberplatten (332, 334) an beiden Bauteileinheiten vorgesehene Zapfen (340, 342, 364) und zwischengefügte Verbindungsmittel (362) mit Ausnehmungen zur Aufnahme der Zapfen (340, 342, 364) umfaßt, so daß jede Schieberplatte (332, 334) und der mit ihr verbundene Arm (358 bzw. 360) gegen eine Relativbewegung zueinander in Bewegungsrichtung zwischen erster und zweiter Stellung festgelegt sind, während eine Relativbewegung zwischen diesen Bauteilen senkrecht zu den Schieberplattenflächen stattfinden kann.

9. Brennkraftmaschine nach Anspruch 8, dadurch gekennzeichnet, daß die eine Schieberplatte (332 oder 334) aus graphitiertem Aluminium und die andere aus einer leichten Stahllegierung hergestellt ist.

10. Schiebervorrichtung, speziell Gleitschiebervorrichtung, für eine Brennkraftmaschine o.dgl. nach einem der vorangehenden Ansprüche, zur Steuerung eines Strömungsmittelflusses durch einen Durchlaß oder Kanal, gekennzeichnet durch zwei aufeinanderliegende, einander überlappende Schieberplatten (332, 334), die jeweils eine Öffnung (336, 338) aufweisen und zwischen einer ersten Stellung, in welcher die Öffnungen (336, 338) miteinander fluchten und einen Durchlaß durch die Schieberplatten (332, 334) herstellen, und einer zweiten Stellung verschiebbar sind, in welcher die Öffnungen (336, 338) voneinander entfernt sind und einen Strömungsmitteldurchtritt durch die Schieberplatten (332, 334) verhindern, durch an den Schieberplatten (332, 334) befestigte Arme (358, 360) und durch eine Einrichtung (372 - 376) zum Hin- und Herverschieben der Arme (358, 360) zwecks Verschiebung der Schieberplatten (332, 334) zwischen den beiden Stellungen.

11. Vorrichtung nach Anspruch 10, dadurch gekennzeichnet, daß eine Einrichtung (394-408) zur intermittierenden Druckgaszufuhr zwischen die Schieberplatten (332, 334) zur Erleichterung ihrer Verschiebung vorgesehen ist.

12. Vorrichtung nach Anspruch 10 und 11, dadurch gekennzeichnet, daß die Druckgas-Zufuhreinrichtung (394-408) die erste Schieberplatte (332) durchsetzende Durchlässe bzw. Kanäle und Lufteinblasmittel (404-408) zur Zufuhr von Druckluft als Druckgas aufweist, wobei die Kanäle eine Verbindung zwischen den Einblasmitteln (404-408) und dem Raum zwischen den einander zugewandten Schieberplatten (332, 334) herstellen.

13. Vorrichtung nach Anspruch 12, dadurch gekennzeichnet, daß die Schieberplatten (332, 334) um ihre Randkanten herum in einem in einem Gehäuse (326) festgelegten Dichtraum (351) angeordnet sind, dessen Weite bzw. Höhe im wesentlichen um 0,05 - 0,13 mm größer ist als die Gesamtdicke der Schieberplatten (332, 334), und daß das Gehäuse (326) eine zentrale Öffnung aufweist, durch welche die Mittelteile der Schieberplatten (332, 334) zur Außenseite des Gehäuses (326) hin freiliegen.

14. Vorrichtung nach Anspruch 12, dadurch gekennzeichnet, daß die Arme (358, 360) mit erster bzw. zweiter Schieberplatte (332 bzw. 334) an einer mittigen Stelle derselben durch die zentrale Öffnung hindurch verbunden sind.

15. Vorrichtung nach Anspruch 10, dadurch gekennzeichnet, daß die Verbindung zwischen den Armen (358, 360) und den Schieberplatten (332, 334) an beiden Bauteileinheiten vorgesehene Zapfen (340, 342, 364) und zwischengefügte Verbindungsmittel (362) mit Ausnehmungen zur Aufnahme der Zapfen (340, 342, 364) umfaßt, so daß jede Schieberplatte (332, 334) und der mit ihr verbundene Arm (358 bzw. 360) gegen eine Relativbewegung zueinander in Bewegungsrichtung zwischen erster und zweiter Stellung festgelegt sind, während eine Relativbewegung zwischen diesen Bauteilen senkrecht zu den Schieberplattenflächen stattfinden kann.

16. Vorrichtung nach Anspruch 15, dadurch gekennzeichnet, daß die eine Schieberplatte (332 oder 334) aus graphitiertem Aluminium und die andere aus einer leichten Stahllegierung hergestellt ist.

17. Vorrichtung nach Anspruch 10, dadurch gekennzeichnet, daß eine Einrichtung (394-408) zur intermittierenden Zufuhr von Druckgas zu der der zweiten Schieberplatte (334) und dem Brennraum (302) gegenüberliegenden Fläche der ersten Schieberplatte (332) vorgesehen ist.

18. Brennkraftmaschine, insbesondere nach einem der Ansprüche 1 bis 9, mit einem Brennraum mit Ansaugeinlaß und Auspuffauslaß sowie einem Drehschieber zur Steuerung der Strömung (Gaswechsel) in den und aus dem Brennraum über die genannten Zulässe, gekennzeichnet durch eine zwischen Brennraum (302) und Drehschieber (314) angeordnete Gleitschiebereinrichtung (312) mit zwei Schieberplatten (332, 334), die einander überlappend übereinander liegen, jeweils eine Öffnung (336, 338) aufweisen und relativ zueinander zwischen einer ersten Stellung, in welcher die Öffnungen (336, 338) miteinander fluchten und eine Strömungsbahn durch die Schieberplatten (332, 334) bilden, und einer zweiten Stellung verschiebbar sind, in welcher die Öffnungen (336, 338) voneinander getrennt sind und eine Strömung durch die Schieberplatten (332, 334) verhindern.

19. Brennkraftmaschine nach Anspruch 18, dadurch gekennzeichnet, daß mit den Schieberplatten (332, 334) an einer mittigen Stelle derselben Arme (358, 360) verbunden sind, durch welche die beiden Schieberplatten
(332, 334) in entgegengesetzte Richtungen zwischen
den beiden Stellungen verschiebbar sind.

20. Schiebervorrichtung, insbesondere nach Anspruch 10
bis 17, mit zwei relativ zueinander verschiebbaren
Schiebern zur Herstellung eines offenen Durchgangs in
einer ersten Stellung und zum Verschließen des
Durchgangs unter Verhinderung eines Strömungsmitteldurchtritts in einer zweiten Stellung und mit einer Einrichtung zum Verschieben der Schieber relativ zueinander,
gekennzeichnet durch eine Einrichtung (394 - 408)
zur Zufuhr von Druckluft mit einem diese Einrichtung
mit der Trennfläche zwischen beiden Schiebern (332, 334)
verbindenden Kanal (406) zur Zufuhr von Druckluft zu
dieser Trennfläche, so daß die Druckluft bei der Relativbewegung zwischen den Schiebern (332, 334) diese unter Erleichterung der Relativbewegung auseinanderzudrücken vermag.

21. Verfahren zur Erleichterung der Relativverschiebung
zwischen Gleitschieberelementen, wobei zwei zueinander bewegbare Schieberelemente in einer ersten Stellung
unter Herstellung einer Abdichtung gegeneinander andrücken und in einer zweiten Stellung eine Schieber-
öffnung herstellen, dadurch gekennzeichnet, daß zwischen die beiden Schieberelemente ein Druckgas eingeleitet wird, durch welches sie zur Erleichterung der
Verschiebung aus der ersten in die zweite Stellung aus
der Abdichtbeziehung heraus verlagert werden.

22. Verfahren nach Anspruch 21, dadurch gekennzeichnet,
daß das Druckgas intermittierend im Augenblick der
Bewegung aus der zweiten in die erste Stellung zugeführt wird, während über den größten Teil der Zeitspanne hinweg, in welcher sich die Schieberelemente in
Abdichtbeziehung zueinander befinden, keine Druckgaszufuhr erfolgt.

FIG. 1

FIG. 2

FIG. 3

FIG. 4

FIG. 5

0003333

FIG. 8

FIG. 7

FIG. 6

0003333

FIG. 10

FIG. 9

0003333

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| | US - A - 1 887 997 (CROSS) <br> * Abbildungen 3,4; Seite 1, Zeilen 1-97 * | 1 |
| | DE - A - 2 339 776 (BAUMGARTNER) <br> * Abbildungen 3,4; Seite 9, Absätze 1,2 * | 2,3,4 |
| A | US - A - 3 449 023 (SPERMAN) <br> * Spalte 1, Zeilen 23-70 * | 2,6 |
| A | NL - C - 57 418 (WERKSPOOR) <br> * Abbildung 1; Seite 1, Zeilen 1-39 * | 1 |
| A,D | US - A - 1 692 396 (TIPTON) <br> * Abbildung 4; Seite 2, Zeilen 52-60 * | 1 |
| A,D | DE - A - 2 703 660 (ALTO AUTOMOTIVE) <br> * Abbildung 2; Seite 15; Absatz 8, Seite 16, Absatz 5 * | 1 |

**KLASSIFIKATION DER ANMELDUNG (Int.Cl.²)**

F 01 L 15/14
F 16 K 31/363
F 16 C 29/024
F 01 L 5/02

**RECHERCHIERTE SACHGEBIETE (Int. Cl.³)**

F 01 L
F 16 K
F 16 C

**KATEGORIE DER GENANNTEN DOKUMENTE**

X: von besonderer Bedeutung

A: technologischer Hintergrund

O: nichtschriftliche Offenbarung

P: Zwischenliteratur

T: der Erfindung zugrunde liegende Theorien oder Grundsätze

E: kollidierende Anmeldung

D: in der Anmeldung angeführtes Dokument

L: aus andern Gründen angeführtes Dokument

&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 23-04-1979 | WASSENAAR |

EPA form 1503.1 06.78